# EUROPEAN PATENT APPLICATION

(11) **EP 3 001 293 A1**
(43) Date of publication of application: **30.03.2016**
(21) Application number: 13900742.1
(22) Date of filing: 30.12.2013
(51) Int. Cl.: G06F 3/0481

(54) **METHOD AND DEVICE FOR RIGHTS MANAGEMENT**

(71) Applicant: Huawei Device Co., Ltd., Shenzhen, Guangdong 518129 (CN)
(72) Inventor: YU, Liang, Shenzhen Guangdong 518129 (CN)
(74) Representative: Epping - Hermann - Fischer
(86) International application number: PCT/CN2013/090915
(87) International publication number: WO 2015/100545

(57) **Abstract**

A permission management method and apparatus are provided. The permission management method includes: setting a corresponding permission for at least one grouping container (101); moving an application into the grouping container according to an instruction of a user (102); and restricting a permission of the application in the grouping container to an intersection of the permission owned by the grouping container and the permission owned by the application (103). The permission management method and apparatus can improve convenience and usability of permission management.

## Description

### TECHNICAL FIELD

Embodiments of the present invention relate to electronic information technologies, and in particular, to a permission management method and apparatus.

### BACKGROUND

With development of computer technologies and smartphones, third-party applications have gained popularity, and there are various types of applications. However, currently many third-party applications secretly have many permissions unrelated to the applications. Therefore, if these applications are installed on a computer, a smartphone, or other terminals, security problems such as information leakage may be caused.

In the prior art, applications, such as a mobile manager, can perform permission management and control, but a user needs to understand permissions item by item, and perform setting one by one. Because there are too many permission items, user operations are inconvenient and error-prone, and the security problems still exist.

### SUMMARY

Embodiments of the present invention provide a permission management method and apparatus, to improve convenience and usability of permission management.

According to a first aspect, an embodiment of the present invention provides a permission management method, including:
setting a corresponding permission for at least one grouping container;
moving an application into the grouping container according to an instruction of a user; and
restricting a permission of the application in the grouping container to an intersection of the permission owned by the grouping container and the permission owned by the application.

In a first possible implementation manner of the first aspect, the grouping container is a desktop page.

According to the first possible implementation manner of the first aspect, in a second possible implementation manner, when a quantity of applications contained by the desktop page reaches a maximum quantity of applications, a desktop page is added for a permission that corresponds to the desktop page, to contain more applications.

According to the first possible implementation manner of the first aspect, in a third possible implementation manner, the method further includes:
displaying, on the desktop page, a permission that is set for the desktop page.

According to a second aspect, an embodiment of the present invention provides a permission management apparatus, including:
a permission setting module, configured to set a corresponding permission for at least one grouping container;
a grouping module, configured to move an application into the grouping container according to an instruction of a user; and
a permission management module, configured to restrict a permission of the application in the grouping container to an intersection of the permission owned by the grouping container and the permission owned by the application.

In a first possible implementation manner of the second aspect, the grouping container is a desktop page.

According to the first possible implementation manner of the second aspect, in a second possible implementation manner, the permission setting module is further configured to:
when a quantity of applications contained by the desktop page reaches a maximum quantity of applications, add a desktop page for a permission that corresponds to the desktop page, to contain more applications.

According to the first possible implementation manner of the second aspect, in a third possible implementation manner, the permission setting module is further configured to display, on the desktop page, a permission that is set for the desktop page.

In the permission management method and apparatus provided in the embodiments of the present invention, a permission is set for a grouping container, and after an application is moved into the grouping container, a permission of the application in the grouping container is restricted to an intersection of the permission owned by the grouping container and the permission owned by the application, so that the permission is a largest permission of software or an application in the grouping container, that is, no software or application in the grouping container can perform any operation beyond the permission owned by the grouping container, so that batch restriction of permissions is implemented, and a user does not need to forbid or permit, one by one, operations to be performed by each application, but prevents improper operations of an application by means of simple operations, thereby improving operatability of permission management.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a permission management method according to the present invention;
FIG. 2 is a schematic structural diagram of an embodiment of a permission management apparatus according to the present invention; and
FIG. 3 is a schematic structural diagram of another embodiment of a permission management apparatus according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

For a problem in the prior art that a permission management operation is complex, and is not user-friendly enough, in the present invention, based on a largest permission principle, a permission is set for a grouping container, where the permission is a largest permission of software or an application in the grouping container, that is, no software or application in the grouping container can perform any operation beyond the permission owned by the grouping container, so that a harmful hidden operation can be prevented.

A permission management method and apparatus in the embodiments may be applied to electronic devices on which software or an application can be installed, such as a computer, a smartphone, and a mobile terminal.

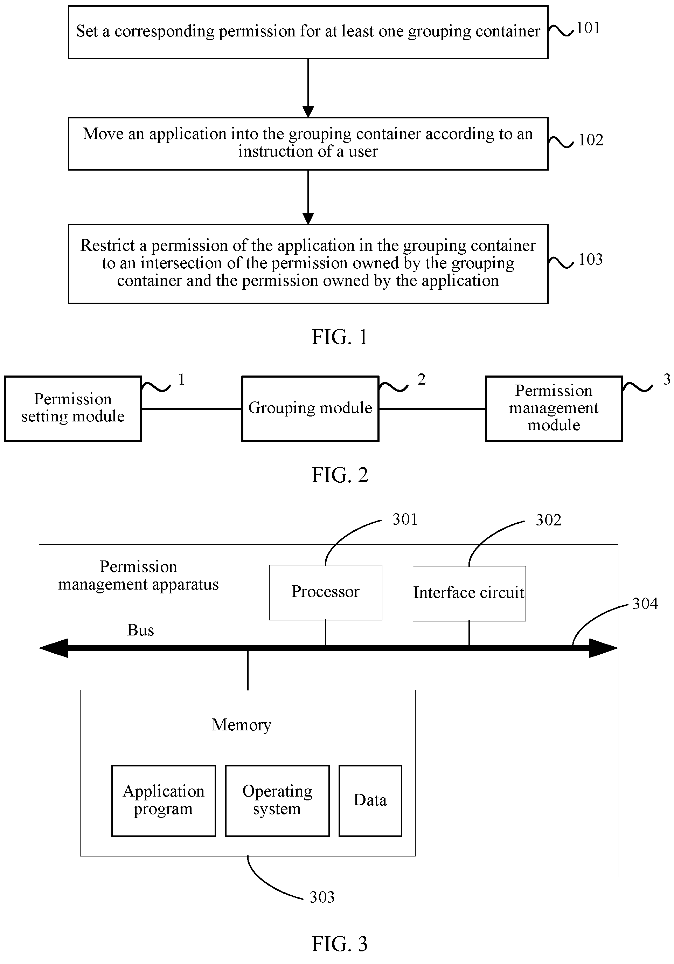

FIG. 1 is a flowchart of an embodiment of a permission management method according to the present invention. As shown in FIG. 1, the method in this embodiment may include:
Step 101: Set a corresponding permission for at least one grouping container.
Step 102: Move an application into the grouping container according to an instruction of a user.
Step 103: Restrict a permission of the application in the grouping container to an intersection of the permission owned by the grouping container and the permission owned by the application.

A permission actually available for the application in the grouping container is the intersection of the permission owned by the grouping container and the permission owned by the application, that is, a largest permission of the application in the grouping container is the permission owned by the grouping container, and any operation beyond the permission owned by the grouping container is forbidden. If an application placed in a permission group page secretly has hidden operations unrelated to superficial use, the hidden operations are naturally forbidden. Therefore, the user does not need to check operations of the application one by one, to determine, one by one, whether to forbid or permit the operations. Even if the user does not know whether a downloaded application has a hidden operation, security of a smartphone or a computer can be ensured.

Further, the grouping container may be a desktop page. An ordinary desktop page may be considered as a grouping container having a completely open permission. An application on the ordinary desktop page has all permissions owned by the application, or has a permission that is obtained after existing permission management and control software performs one-by-one management and control. In this embodiment, a permission may be set for the desktop page, and a permission actually available for the application on the desktop page is an intersection of the permission of the application and the permission owned by the page.

Further, during specific implementation, the permission that is set for the desktop page may be displayed on the desktop page. Any proper appearance manner, such as a text note on an upper left comer or an upper right corner, may be used for the desktop page for which a permission is set, to indicate that the desktop page is a desktop page attached with a permission, for example, a name of the desktop page may be displayed.

To prevent an uneasy use problem caused by the fact that because the user divide permissions on an excessively specific basis, there are too many grouping containers, a series of default grouping containers for which a permission is set may be provided. For example, all permissions except taking photos in the background, reading contacts, and dialing in the background may be set for at least one desktop page, and the desktop page forbids permissions related to taking photos in the background, reading contacts, and dialing in the background, and allows all other permissions. That is, the desktop page allows all other permissions in permissions owned by user equipment or an electronic device except taking photos in the background, reading contacts, and dialing in the background. All applications that are unrelated to these forbidden permissions according to use of the applications, such as a music player or a reader, can be placed into the grouping container, so that not only all improper operations of the application are prevented, but also the user does not need to confirm permissions of the application one by one. In this case, a name of the desktop page may be "cannot take photos in the background, read contacts, or dial in the background". The name may be displayed on the desktop page, so that the user can clearly see the name.

In addition, during specific implementation, a prompt message may be given to the user in the user interface: categories are divided according to superficial use of applications, a permission group is set for every use category, and the permission group includes only a basic permission needed to achieve the use. If an application placed in a desktop page secretly has hidden operations unrelated to the superficial use, the hidden operations are naturally forbidden.

Setting a permission, modifying a permission, and canceling a permission for the desktop page (the desktop page becomes an ordinary desktop page after cancelation) may be executed by permission management and control software, or may be executed in any proper manner.

In step 102, the application may be moved into a desktop page specified by the user. When a quantity of applications contained by a desktop page (referred to as a first desktop page) reaches a maximum quantity of applications, a desktop page (referred to as a second desktop page) may be added, and a permission the same as a permission of the first desktop page is set for the second desktop page, to contain more applications. Moreover, during specific implementation, a sorting algorithm may be used, so that all desktop pages having the same permission are close to each other in space arrangement. That is, when a desktop page having a specific permission is full and cannot contain an application that is to be added to the desktop page, a desktop page is added, and an application is contained in the newly-added page. Correspondingly, if a left page that corresponds to permission does not store any application, the desktop page may be deleted according to an instruction of the user.

An existing technology of moving an application icon between pages may be used to perform an operation of moving a desktop icon of each application between pages. When the application icon enters a permission group page, a largest permission of the application is limited within a permission of the desktop page. When the application icon leaves a desktop page having a permission, the application icon is not managed or controlled by the permission of the desktop page. For example, when an application is moved to a desktop page B from a desktop page A, the application is not managed or controlled by a permission group on the desktop page A, and instead, the application is managed and controlled by a permission group on the desktop page B.

In this embodiment, a permission is set for a grouping container, and after an application is moved into the grouping container, a permission of the application in the grouping container is restricted to an intersection of the permission owned by the grouping container and the permission owned by the application, so that the permission is largest permission of software or an application in the grouping container, that is, no software or application in the grouping container can perform any operation beyond the permission owned by the grouping container, so that batch restriction of permissions is implemented, and a user does not need to forbid or permit, one by one, operations to be performed by each application, but prevents improper operations of an application by means of simple operations, thereby improving operatability of permission management.

FIG. 2 is a schematic structural diagram of an embodiment of a permission management apparatus according to the present invention. As shown in FIG. 2, the apparatus in this embodiment may include: a permission setting module 1, a grouping module 2, and a permission management module 3, where
the permission setting module 1 is configured to set a corresponding permission for at least one grouping container;
the grouping module 2 is configured to move an application into the grouping container according to an instruction of a user; and
the permission management module 3 is configured to restrict a permission of the application in the grouping container to an intersection of the permission owned by the grouping container and the permission owned by the application.

Further, the grouping container is a desktop page.

Further, the permission setting module 1 is further configured to:
when a quantity of applications contained by a first desktop page reaches a maximum quantity of applications, add a second desktop page, and set a permission the same as a permission of the first desktop page for the second desktop page, to contain more applications.

Further, the permission setting module 1 is further configured to display, on the desktop page, a permission that is set for the desktop page.

For example, the permission setting module 1 may be specifically configured to:
set all permissions except taking photos, reading contacts, and dialing in the background for the at least one grouping container.

The apparatus in this embodiment may be configured to execute the technical solution of the method embodiment shown in FIG. 1. An implementation principle is similar, and no further details are described herein again.

In this embodiment, a permission is set for a grouping container, and after an application is moved into the grouping container, a permission of the application in the grouping container is restricted to an intersection of the permission owned by the grouping container and the permission owned by the application, so that the permission is largest permission of software or an application in the grouping container, that is, no software or application in the grouping container can perform any operation beyond the permission owned by the grouping container, so that batch restriction of permissions is implemented, and a user does not need to forbid or permit, one by one, operations to be performed by each application, but prevents improper operations of an application by means of simple operations, thereby improving operatability of permission management.

FIG. 3 is a schematic structural diagram of another embodiment of a permission management apparatus according to the present invention. As shown in FIG. 3, the permission management apparatus includes a processor 301 and an interface circuit 302. The figure further shows a memory 303 and a bus 304. The processor 301, the interface circuit 302, and the memory 303 are connected and communicate with each other by using the bus 304.

The bus 304 can be an industry standard architecture (Industry Standard Architecture, ISA) bus, a peripheral component (Peripheral Component, PCI) bus, an extended industry standard architecture (Extended Industry Standard Architecture, EISA) bus, or the like. The bus 304 may be divided into an address bus, a data bus, a control bus, and the like. For the convenience of representation, only one thick line is used to represent the bus in FIG. 3, but it does not mean that there is only one bus or one type of bus.

The memory 303 is configured to store executable program code, where the program code includes a computer operation instruction. The memory 303 may include a high-speed RAM memory, or may further include a non-volatile memory (non-volatile memory), for example, at least one magnetic disk storage.

The processor 301 may be a central processing unit (Central Processing Unit, CPU), an application specific integrated circuit (Application Specific Integrated Circuit, ASIC), or one or more integrated circuits configured to implement the embodiments of the present invention.

The processor 301 is configured to:
set a corresponding permission for at least one grouping container;
move an application into the grouping container according to an instruction of a user; and
restrict a permission of the application in the grouping container to an intersection of the permission owned by the grouping container and the permission owned by the application.

Optionally, the grouping container is a desktop page.

Optionally, the processor 301 is further configured to: when a quantity of applications contained by a first desktop page reaches a maximum quantity of applications, add a second desktop page, and set a permission the same as a permission of the first desktop page for the second desktop page, to contain more applications.

Optionally, the processor 301 can be further configured to:
display, on the desktop page, a permission that is set for the desktop page.

For example, the processor 301 may be specifically configured to set all permissions except taking photos, reading contacts, and dialing in the background for the at least one grouping container.

The apparatus in this embodiment may be configured to execute the technical solution of the method embodiment shown in FIG. 1. An implementation principle is similar, and no further details are described herein again.

In this embodiment, a permission is set for a grouping container, and after an application is moved into the grouping container, a permission of the application in the grouping container is restricted to an intersection of the permission owned by the grouping container and the permission owned by the application, so that the permission is largest permission of software or an application in the grouping container, that is, no software or application in the grouping container can perform any operation beyond the permission owned by the grouping container, so that batch restriction of permissions is implemented, and a user does not need to forbid or permit, one by one, operations to be performed by each application, but prevents improper operations of an application by means of simple operations, thereby improving operatability of permission management.

Persons of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A permission management method, comprising:
setting a corresponding permission for at least one grouping container;
moving an application into the grouping container according to an instruction of a user; and
restricting a permission of the application in the grouping container to an intersection of the permission owned by the grouping container and the permission owned by the application.

2. The method according to claim 1, wherein the grouping container is a desktop page.

3. The method according to claim 2, wherein when a quantity of applications contained by a first desktop page reaches a maximum quantity of applications, adding a second desktop page, and setting a permission the same as a permission of the first desktop page for the second desktop page.

4. The method according to claim 2, further comprising: displaying, on the desktop page, a permission that is set for the desktop page.

5. A permission management apparatus, comprising:
a permission setting module, configured to set a corresponding permission for at least one grouping container;
a grouping module, configured to move an application into the grouping container according to an instruction of a user; and
a permission management module, configured to restrict a permission of the application in the grouping container to an intersection of the permission owned by the grouping container and the permission owned by the application.

6. The apparatus according to claim 5, wherein the grouping container is a desktop page.

7. The apparatus according to claim 6, wherein the permission setting module is further configured to: when a quantity of applications contained by a first desktop page reaches a maximum quantity of applications, add a second desktop page, and set a permission the same as a permission of the first desktop page for the second desktop page.

8. The apparatus according to claim 6, wherein the permission setting module is further configured to display, on the desktop page, a permission that is set for the desktop page.
